(19) **Europäisches Patentamt European Patent Office Office européen des brevets**

(11) **EP 4 441 919 B1**

(12) **EUROPEAN PATENT SPECIFICATION**

(45) Date of publication and mention
of the grant of the patent:
**29.04.2026 Bulletin 2026/18**

(21) Application number: **21830630.6**

(22) Date of filing: **03.12.2021**

(51) International Patent Classification (IPC):
**H04B 7/155** (2006.01)

(52) Cooperative Patent Classification (CPC):
**H04B 7/15528; H04B 7/04013**

(86) International application number:
**PCT/EP2021/084253**

(87) International publication number:
**WO 2023/099016 (08.06.2023 Gazette 2023/23)**

(54) **CONFIGURING AN INTELLIGENT REFLECTING SURFACE (IRS)**

KONFIGURIEREN EINER INTELLIGENTEN REFLEXIONSFLÄCHE (IRS)

CONFIGURER UNE SURFACE RÉFLÉCHISSANTE INTELLIGENTE (IRS)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.10.2024 Bulletin 2024/41**

(73) Proprietor: **TELEFONAKTIEBOLAGET LM ERICSSON (publ)**
**164 83 Stockholm (SE)**

(72) Inventors:
• **MAKKI, Behrooz**
**435 43 Pixbo (SE)**
• **FODOR, Gabor**
**165 52 Hässelby (SE)**
• **DE ALMEIDA, André L. F.**
**60810-140 FORTALEZA (BR)**
• **NETO, Francisco, H. C.**
**60714-750 Fortaleza-CE (BR)**

(74) Representative: **Ericsson Patent Development Torshamnsgatan 21-23 164 80 Stockholm (SE)**

(56) References cited:
• NGUYEN CONG LUONG ET AL: "Dynamic Network Service Selection in IRS-Assisted Wireless Networks: A Game Theory Approach", ARXIV.ORG, CORNELL UNIVERSITY LIBRARY, 201 OLIN LIBRARY CORNELL UNIVERSITY ITHACA, NY 14853, 4 August 2020 (2020-08-04), XP081731231
• CHO HYESANG ET AL: "Alternating Beamforming With Intelligent Reflecting Surface Element Allocation", IEEE WIRELESS COMMUNICATIONS LETTERS, IEEE, PISCATAWAY, NJ, USA, vol. 10, no. 6, 2 March 2021 (2021-03-02), pages 1232 - 1236, XP011859141, ISSN: 2162-2337, [retrieved on 20210608], DOI: 10.1109/LWC.2021.3062992
• PEI XILONG ET AL: "RIS-Aided Wireless Communications: Prototyping, Adaptive Beamforming, and Indoor/Outdoor Field Trials", IEEE TRANSACTIONS ON COMMUNICATIONS, IEEE SERVICE CENTER, PISCATAWAY, NJ. USA, vol. 69, no. 12, 29 September 2021 (2021-09-29), pages 8627 - 8640, XP011894633, ISSN: 0090-6778, [retrieved on 20211215], DOI: 10.1109/ TCOMM.2021.3116151
• ARUN VENKAT ET AL: "RFocus: Practical Beamforming for Small Devices", 13 May 2019 (2019-05-13), XP055813966, Retrieved from the Internet <URL:https://arxiv.org/pdf/1905.05130. pdf> [retrieved on 20210615]

**(Cont. next page)**

EP 4 441 919 B1

- **LAI PENGHUI ET AL: "Reconfigurable Intelligent Surface-Enabled Spectrum-Sharing Communications Based on Successive Interference Cancellation", IEEE WIRELESS COMMUNICATIONS LETTERS, IEEE, PISCATAWAY, NJ, USA, vol. 11, no. 1, 21 October 2021 (2021-10-21), pages 116 - 120, XP011896615, ISSN: 2162-2337, [retrieved on 20220106], DOI: 10.1109/LWC.2021.3121685**

**Description**

TECHNICAL FIELD

Disclosed are embodiments related to intelligent reflecting surfaces (IRSs).

BACKGROUND

An intelligent reflecting surface (IRS) (also known as reconfigurable intelligent surface (RIS)) is a device that is able to control the properties of electromagnetic waves and, thereby, dynamically shape a radio propagation environment (see, e.g., reference [1]). IRSs are regarded as a promising emerging hardware technology to improve the spectrum and energy efficiency of wireless networks by reconfiguring the propagation environment of electromagnetic waves.

An IRS generally comprises an array of low-cost and low-complexity signal reflectors. The reflectors are configurable (i.e., programmable). That is, for example, the phases of the reflectors can be adjusted in real-time so that an impinging signal can be re-phased by adjusting the phases of the reflectors. This re-phasing is done to efficiently re-direct the impinging signal towards an in-range receiver (e.g., a communication device (CD)). (See, e.g., reference [1]).

In many cases, the programmability is achieved by equipping the IRS with a network interface and a processing unit (e.g., microcontroller, microprocessor, etc.). The network interface enables the establishment of a control link between the IRS and a network node (e.g., access point (AP), CD, etc.) through which the IRS can receive feedback, for example, in terms of Signal-to-Noise Ratio or Signal-to-Interference-plus-Noise-Ratio (the acronym SNR is used broadly to encompass either ratio) and/or instructions (e.g., how to adjust the phases of reflectors). In some configurations, the processing unit allows the IRS to execute pre-computed instructions, while in other configurations the processing unit computes- and-executes instructions based on the received feedbacks.

IRS deployment aims to increase coverage (e.g., in terms of SNR) at network edge and in poor coverage areas (e.g., indoor environments) and to improve end-user performance (e.g., data rate). IRS deployment is more scalable than massive Multiple-Input-Multiple-Output (MIMO) deployment and heterogeneous network (e.g., macro cells and small cells) deployment in terms of complexity, interference management, power consumption, and costs. Use cases include IRS deployment for smart cities (e.g., on the external façade of buildings) and smart indoor environments (e.g., in private homes and large indoor open spaces such as malls and airports).

Algorithms to configure a IRS have been proposed. One such algorithm is referred to as "RFocus" (see V. Arun 2019 (reference [3])). RFocus performs the IRS configuration based on SNR feedbacks. Results confirm that SNR gains are attainable using the RFocus algorithm (see reference [4]). The algorithm allows for activating a subset of reflectors to improve the SNR at the receiver end. It performs several iterations to search for the subset of reflectors to activate. It has been shown that power can be focused on a point in space by such a simple on-off strategy.

The Third Generation Partnership Project (3GPP) may consider IRS-assisted communication as a possible technology to be considered in a future 3GPP release as a low complexity method for capacity enhancement and coverage extension (see, e.g., references [2] and [3]).

SUMMARY

Certain challenges presently exist. For example, IRSs can be utilized by different nodes simultaneously where each IRS can be partitioned into a number of sub-IRSs each one boosting the performance of communication between two nodes, but this may lead to additional interference at the receivers, message decoding failure, and possibly multiple hybrid automatic repeat request (HARQ) based retransmissions.

The scope of the invention is defined by the independent claims. Advantageous embodiments are provided by the dependent claims.

An advantage of the embodiments disclosed herein is that they enable adaptive transmission and reception/-decoding in IRS-assisted networks, where the IRSs partitioning and configurations are dynamically adapted based on, for example, the message decoding status and/or the channel quality of different links. Such a setup leads to an improved fairness in the network as well as better average end-to-end data transmission delay. Finally, the intelligent IRS partitioning gives the chance to improve the performance of the CD with a weak channel quality while not losing the performance of the CD with a strong channel quality.

BRIEF DESCRIPTION OF THE DRAWINGS

The accompanying drawings, which are incorporated herein and form part of the specification, illustrate various embodiments.

FIG. 1 illustrates a communication system according to an embodiment.
FIG. 2 is a flowchart illustrating a process according to some embodiments.
FIG. 3 is a block diagram of a network node according to some embodiments.

DETAILED DESCRIPTION

As noted above, if an IRS is not properly configured, use of the IRS may lead to additional interference at the receivers, message decoding failure, and possibly multiple HARQ-based retransmissions. For this reason, it is beneficial to develop techniques to reduce the effect of interference. Also, explained in the following, one can utilize the information about the message decoding status, as well as the channel quality and communication needs, at different nodes to dynamically adapt an IRS partitioning between the links during the retransmissions or HARQ-based retransmissions, resulting in an improved network fairness.

This disclosure describes, among other things, an efficient IRS-assisted communication setup, possibly, using HARQ. In one embodiment, based on the message decoding status and/or the channels quality/communication needs at different links sharing the same IRS, the receiver design and the IRS partitioning (and its corresponding configurations) are adapted jointly in different transmissions or HARQ-based retransmission rounds. Moreover, the data transmission, e.g., beamforming/power allocation, at the transmitters as well as the signal decoding and buffering schemes at the receivers may be adapted to reduce the effect of interference. In this way, the network end-to-end data transmission delay and the fairness will be improved.

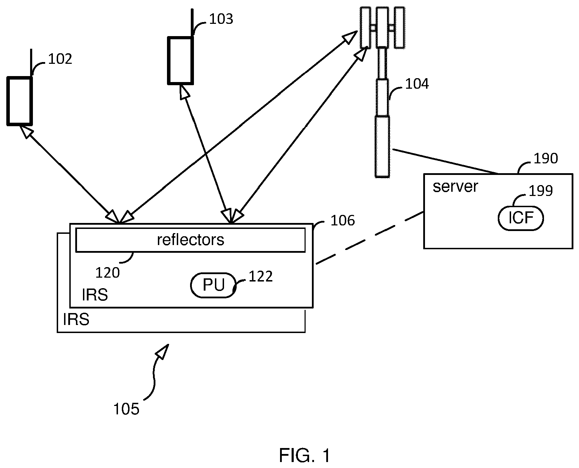

FIG. 1 illustrates a communication system 100 according to an embodiment. Communication system includes: an access network node 104 (also referred to herein as "access point (AP)") (e.g., a radio access network (RAN) node a cellular network (e.g., a base station)), a first communication device (CD) 102, a second CD 103 and a set of one or more IRSs 105, which includes IRS 106 and which comprises a set of configurable reflectors 120 (or simply reflectors 120 for short) and a processing unit 122. As used herein a "CD" is any device (e.g., mobile phone, router, sensor, appliance, vehicle, smart meter, computer) capable of wireless communication with AP 104. As shown in FIG. 1, a signal transmitted by CD 102 impinges on IRS 106 and IRS 106 is configured to reflect the impinging signal toward AP 104; likewise, a signal transmitted by CD 102 impinges on IRS 106 and IRS 106 is configured to reflect the impinging signal toward AP 104.

As also shown in FIG. 1, communication system 100 may include a computer 190 (a.k.a., "server") that executes an IRS control function (ICF) 199 that implements a method for configuring reflectors 120. For example, ICF 199 is configured to select the configuration(s) for configuring one or more reflectors of IRS 106. In other embodiments, ICF may be component of AP 104 or UE 102.

As demonstrated in FIG. 1, IRS is a promising cost-effective technology for boosting the spectrum and energy efficiency in future wireless communication systems. Specifically, the set of one or more IRSs 105 is able to establish proper channel responses by controlling the wireless propagation environment via its large set of reflectors 120. For instance, considering FIG. 1, and assuming that CD 103 and AP 104 are not communicating with each other, the signal transmitted by CD 102 and received at AP 104 is given by:

$$Y = \sqrt{P_{\mathrm{CD}}}\,\boldsymbol{h}_{\mathrm{IRS-AP}}^{H}\boldsymbol{\Theta}\boldsymbol{h}_{\mathrm{CD-IRS}} + z \qquad \text{(Eq. 1)}$$

Here, z is the additive noise at the AP. Also, $\boldsymbol{h}_{\mathrm{IRS-AP}}^{H}$ and $\boldsymbol{h}_{\mathrm{CD\text{-}IRS}}$ are the IRS-AP and the CD-IRS channel gains, respectively. Then, $\Theta$ is the IRS matrix, which is determined to optimize, e.g., the received SNR. Finally, $P_{\mathrm{CD}}$ is the CD 102 transmission power.

An IRS is neither a passive reflecting surface nor a relay. This is because, as opposed to a passive surface, an IRS needs to be activated by the AP (or another network node) and its phase shifter parameters should be properly set based on the UEs to be served by the AP, channel realizations, etc. In contrast to a relay node, which receives the signal as an AP and, after some process, forwards the data in the next time slot(s) with some scheduling (thus, basically the CD-relay and the relay-AP are separated links with, e.g., two independent RACH processes), an IRS reflects the CD signal towards the AP with no extra delay, etc. and, for example, only a single RACH process is required for the CD-IRS-AP chain.

Moreover, the flexibility of the IRS, reflected by $\Theta$ in equation 1, is highly dependent on the size and the hardware properties of the IRS and the parameter setting of the IRS affects the CD transmit power/beamforming accordingly.

In an IRS-assisted communication setup, the set of reflectors 120 of IRS(s) 105 can be divided to, in effect, create a number of sub-IRSs each one responsible to boost the performance of a specific link. For example, based on the link quality and a CD's QoS requirements, the set of reflectors 120 can be partitioned into at least two subsets: a first subset of reflectors (a.k.a., first partition) to serve a first link between CD 102 and AP 104 and a second subset of reflectors (a.k.a., second partition) to serve second link between CD 103 and AP 104. Basically, the IRS partitioning means that the IRS matrix for each partition (i.e., each subset of reflectors) is optimized only to maximize the performance of its associated link, at the cost of possible interference in the other link. That is, the IRS matrix for the first partition is optimized to maximize the SNR of the CD 102-IRS-AP link, while the IRS matrix for the second partition is determined such that the SNR of the CD 103-IRS-AP link is maximized. However, depending on the quality of the links, such a partitioning may lead to multiple HARQ-based retransmissions which are preferred to be avoided in sake of reducing the end-to-end transmission delay. An IRS matrix is a set of one or more values, where each value specifies a characteristic of one of the reflectors. For example, the characteristic may be: i) the phase shift produced by the reflector, ii) whether the reflector changes the polarization of the impinging signal, iii) a frequency shift produced by the reflector, iv) the degree to which the reflector modifies the amplitude of the impinging signal, v) angle of departure, etc.

This disclosure describes an adaptive IRS partitioning scheme in the cases, possibly, using HARQ. Here, an objective is to improve the performance of the UEs with weak channel quality while not losing the quality-of-service (QoS) of the UEs with a strong channel quality. In this way, the proposed scheme results in an improved network fairness and reduces the average end-to-end data transmission delay. The proposed scheme can be explained through the example given below. Note that, for simplicity, the setup is explained for the cases with HARQ. However, the same approach is applicable in a more general case with different channel quality of the links and/or UEs requirements

In a first step, based on the CD 102's QoS requirements, CD 103's QoS requirements, and/or the link qualities, the set of reflectors 120 is divided into at least two subsets (e.g., a first subset of the reflectors 120 ("first partition") and a second disjoint subset of the reflectors 120 ("second partition")). For instance, in one example, the number of reflectors included in the first and second partitions (a.k.a., "initial partition sizes") are based on the relative QoS requirements of CD 102 and U 103. As a specific example, assuming that CD 102 has higher QoS requirements than CD 103, then the number of reflectors included in the first partition is greater than the number of reflectors included in the second partition (i.e., CD 102 gets a larger IRS partition). As another example, if CD 102 is further away from AP 104 than CD 103 then CD 102 will again get a larger IRS partition. As another example, if CD 102 has a lower signal power (received or transmitted) than CD 103, then CD 102 may be allocated a larger IRS partition than CD 103.

In another step, an IRS matrix is determined for each partition (such an IRS matrix is referred to as a "sub-IRS matrix"). Each sub-IRS matrix may be based on the link quality of its associated link as is known in the art. That is, each IRS partition can be treated like a conventional IRS and can be configured using conventional techniques (see, e.g., reference [1]).

In another step, which may come before or after the previously described step, transmission parameters (e.g., beamforming parameters, transmission power, etc). are determined for each CD. In some embodiments, at least some of the transmission parameters are based on the associated sub-IRS matrix. In one embodiment, such configurations are determined by AP 104, or in general, a network controller, and the IRS and the UEs are informed accordingly.

After the transmission parameters a determined, then, using these parameter settings, CD 102 transmits to AP 104 a first signal encoding a first message and in the same slot (e.g., Slot 1) CD 103 also transmits to AP a second signal encoding a second message (e.g., the transmissions may occur during the same orthogonal frequency-division multiplexing (OFDM) symbols). In additional to the first and second signals being transmitted in the same slot, each CD may use the same frequency resources (e.g. the same subcarriers) to transmit their respective signals.

Because the signals are transmitted in the same slot, AP 104 receives an accumulated signal (i.e., the first signal combined with the second signal), and then attempts to decode the first and second messages.

Let us assume that AP 104 can correctly decode the message of CD 102 but it fails to decode the message of CD 103. In this case, the following procedures may be performed. AP 104 sends a positive acknowledgment (ACK) to CD 102 and negative acknowledgment (NACK) to CD 103. Also, using successive interference cancellation (SIC), AP 104 removes the decoded signal of CD 102 from the accumulated received signal, and buffers the interference-free but un-decoded signal of CD 103. Based on the message decoding status of the links and the order of the required retransmission, AP 104 re-partitions reflectors 120 (i.e., establishes a new partition for CD 102 and/or a new partition for CD 103), determines a new IRS matrix for each new partition, and determines new transmission parameters (e.g., beamforming/-transmission powers) for the UEs. Then, along with the ACK/NACK, the AP informs the IRS and the UEs about the new IRS partitioning, the IRS matrices of the new partitions, as well as the UEs adapted transmission parameters.

During a subsequent transmission opportunity, CD 102 sends to AP 104 a new signal encoding a third message while CD 103 retransmits the second message using the new transmission parameter settings. AP 104 then receives a new accumulated signal and performs the following process. First, AP 104 combines the buffered interference-free signal of CD 103 and the new accumulated interference-affected signal (received in Slot 2) to decode the message of CD 103 (i.e., the second message). Then, with a successful decoding of the signal of CD 103, AP 104 uses SIC to remove the signal of CD 103 from the accumulated signal of Slot 2, and decodes the new signal of CD 102 interference-free. Such an adaptation continues until the signal of CD 103 is correctly decoded.

In this way, adaptation of the IRS partitioning and the UEs transmission parameters (e.g., transmission power, beamforming and/or data rate) gives the chance to correctly decode the signal of CD 103 with few retransmissions. This will lead to low end-to-end transmission delay for CD 103. On the other hand, while CD 102 receives a smaller portion of the IRS in Slot 2, this is compensated by decoding its signal interference-free. As a result, the joint adaptation of the IRS partitioning and decoding scheme makes it possible to boost the performance of CD 103 while the QoS provided to CD 102 is not affected much. In this way, the proposed scheme results in an improved end-to-end transmission delay and fairness in the network.

In one embodiment, a set of specific IRS configuration strategies are predefined. For example, IRS 106 may have a fixed set of IRS matrices to choose from, thus determining a sub-IRS matrix for a partition may comprise selecting one of the pre-defined matrices. As another example, one strategy is to have all reflectors within a partition have the same or nearly the same phase and/or amplitude. Yet another strategy is to minimize interference. In one embodiment, each IRS configuration strategy is associated with a set of transmission parameters that includes, for example, a timing advance value, a beamforming setting, and/or transmit power setting. In a one embodiment, the selected IRS configuration strategy is signaled from the network node to the CD using cell-specific RRC signaling, CD-specific RRC signaling, medium access control (MAC) control element (CE) signaling, or downlink control information (DCI) signaling (e.g., included in the control signaling used for scheduling a data transmission/reception).

In one embodiment, the appropriate IRS partitioning/configuration and the UEs transmission parameters associated with each retransmission combination of the UEs are determined offline and saved in, e.g., a network controller. Then, with a possible retransmission scenario, the AP, IRS and the UEs switch immediately to a predefined configuration.

In one embodiment, either or both of CD 102 and CD 103 is an integrated access and backhaul (IAB) node, where, for instance, an IAB node connects to its parent IAB using IRSs.

The examples given above illustrate the cases with probable message decoding failure in some links and the need for HARQ-based retransmissions where the IRS partitioning is adapted based on the message decoding status of different links. However, this is not necessary, as the same approach can be applied in the more general cases with different UEs requirements and/or channel qualities. Particularly, changing the IRSs partitioning can be performed on a larger time scale than HARQ retransmissions since a changed surface area also implies a changed channel and correspondingly, a changed MCS. Here, using reference signals (RSs), such as channel state information RS (CSI-RS), sounding RS (SRS), etc., the AP 104 can find out the channel quality of different links.

Accordingly, in a general way, the following procedure can be applied for IRS partitioning. Step 1: Obtain channel information indicating an estimated channel quality of a link between the IRS and a transmitting or receiving device (e.g., CD 102). For example, perform measurements for CD links via IRS using CSI-RS, SRS or other reference signals, or message decoding status, Step 2: Based on communication needs and/or the estimated channel quality and/or number of retransmission (e.g., a CD that received a NACK (or multiple NACKS) may get bigger portion of IRS), determine partition size for the CD. Step 3: For each partition, determine an IRS matrix. Step 4: Send the IRS matrices to the IRS and send configuration information (e.g., transmission parameters) to the UEs. Step 5: communicate with UEs using the new configurations.

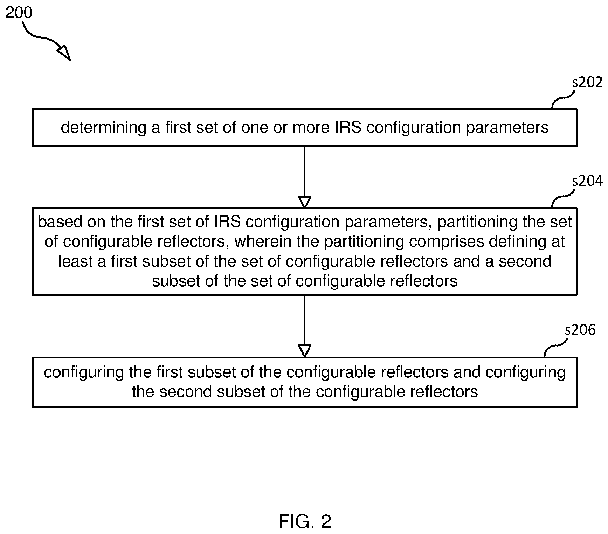

FIG. 2 is a flowchart illustrating a process 200, according to an embodiment, that is performed by a network node (e.g., AP 400, CD 102, server 190) for configuring a set of reflectors, wherein the set of reflectors are provided by as set of one more IRSs, which set includes IRS 106. Process 200 may begin in step s202.

Step s202 comprises determining a first set of one or more IRS configuration parameters, wherein the first set of IRS configuration parameters comprises at least one of: (a) a first link quality metric for a first link between a first CD (e.g., CD 102) and an access network node (e.g., AP 104), wherein the first link comprises a first channel between the first CD and the set of one or more IRSs and a second channel between the set of one or more IRSs and the access network node; (b) a first quality-of-service, QoS, requirement for the first CD; or (c) a transmission status (e.g., number of retransmissions) for the first CD.

Step s204 comprises, based on the first set of IRS configuration parameters, partitioning the set of configurable reflectors, wherein the partitioning comprises defining at least a first subset of the set of configurable reflectors and a second subset of the set of configurable reflectors.

Step s206 comprises after defining the first and second subsets, configuring the first subset of the configurable reflectors and configuring the second subset of the configurable reflectors.

In some embodiments, the first subset of configurable reflectors comprises a first reconfigurable reflector the method further comprises determining a phase shift for the first reconfigurable reflector, and configuring the first subset of configurable reflectors comprises configuring the first configurable reflector to produce the determined phase shift.

In some embodiments, the first subset of configurable reflectors comprises a first reconfigurable reflector, and configuring the first subset of configurable reflectors comprises placing the first configurable reflector in an off state to prevent the first configurable reflector from reflecting an impinging signal.

In some embodiments, configuring the first subset of configurable reflectors comprises obtaining a first set of link quality metrics, wherein each link quality metric in the first set of link quality metrics indicates a quality of the first link between the first CD and the access network node, and configuring the second subset of configurable reflectors comprises obtaining a second set of link quality metrics, wherein each link quality metric in the second set of link quality metrics indicates a quality of the second link between the second CD and the access network node.

In some embodiments the method also includes determining a second set of one or more IRS configuration

**EP 4 441 919 B1**

parameters, wherein the second set of IRS configuration parameter comprises at least one of: (a) a second link quality metric for a second link between a second CD and the access network node, wherein the second link comprises a third channel between the second CD and the one or more IRSs and a fourth channel between the one or more IRSs and the access network node; (b) a second QoS requirement for the second CD; or (c) a transmission status for the second CD, wherein partitioning the set of configurable reflectors comprises partitioning the set of configurable reflectors based on both the first set of IRS configuration parameters and the second set of IRS configuration parameters.

In some embodiments the method also includes: the access network node receiving, during a first time slot, a first accumulated signal comprising a first message transmitted by the first CD and a second message transmitted by the second CD; the access network node decoding from the received accumulated signal the second message transmitted by the second CD, but the access network node not being able to decode from the received accumulated signal the first message transmitted by the first CD; in response to being able to decode the second message but not the first message, the access network node triggering an ICF (e.g., ICF 199) to re-partition the set of configurable reflectors and transmitting a negative acknowledgement (NACK) message to the first CD for causing the first CD to retransmit the first message.

In some embodiments, repartitioning the set of configurable reflectors comprises defining at least a third subset of the set of configurable reflectors and a fourth subset of the set of configurable reflectors, and the method further comprises, after defining the third and fourth subsets, configuring the third subset of the configurable reflectors and configuring the fourth subset of the configurable reflectors.

In some embodiments, the third subset of the configurable reflectors comprises each reflector that was included in the first subset of the configurable reflectors and one or more configurable reflectors that were included in the second subset of the configurable reflectors.

In some embodiments, the method also includes, in response to being able to decode the second message but not the first message, the access network node removing the decoded second message from the received accumulated signal to produce an interference-free signal encoding the first message and buffering the interference-free signal.

In some embodiments, the method also includes, after sending the NACK message to the first CD, the access network node receiving, during a second time slot, a second accumulated signal comprising the first message; the access network node combining the buffered interference-free signal with the second accumulated signal to produce a combined signal; and the access network node attempting to decode the first message from the combined signal.

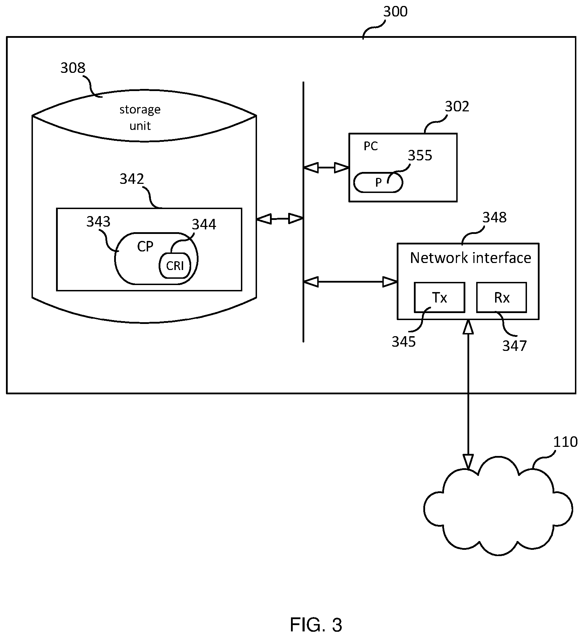

FIG. 3 is a block diagram of network node 300, according to some embodiments, that can implement any one or more of the network nodes described herein (e.g., AP 104, CD 102, server 190). That is, network node 300 can perform the above described methods. As shown in FIG. 3, network node 300 may comprise: processing circuitry (PC) 302, which may include one or more processors (P) 355 (e.g., a general purpose microprocessor and/or one or more other processors, such as an application specific integrated circuit (ASIC), field-programmable gate arrays (FPGAs), and the like), which processors may be co-located in a single housing or in a single data center or may be geographically distributed (i.e., network node 300 may be a distributed computing apparatus); at least one network interface 348 comprising a transmitter (Tx) 345 and a receiver (Rx) 347 for enabling network node 300 to transmit data to and receive data from other nodes connected to a network 110 (e.g., an Internet Protocol (IP) network) to which network interface 348 is connected (directly or indirectly) (e.g., network interface 348 may be wirelessly connected to the network 110, in which case network interface 348 is connected to an antenna arrangement); and a storage unit (a.k.a., "data storage system") 308, which may include one or more nonvolatile storage devices and/or one or more volatile storage devices. In embodiments where PC 302 includes a programmable processor, a computer readable medium (CRM) 342 may be provided. CRM 342 stores a computer program (CP) 343 comprising computer readable instructions (CRI) 344. CRM 342 may be a non-transitory CRM, such as, magnetic media (e.g., a hard disk), optical media, memory devices (e.g., random access memory, flash memory), and the like. In some embodiments, the CRI 344 of computer program 343 is configured such that when executed by PC 302, the CRI causes network node 300 to perform steps described herein (e.g., steps described herein with reference to the flow charts). In other embodiments, network node 300 may be configured to perform steps described herein without the need for code. That is, for example, PC 302 may consist merely of one or more ASICs. Hence, the features of the embodiments described herein may be implemented in hardware and/or software.

Conclusion

The adaptive IRS partitioning and updating the configurations (e.g., IRS matrices) for the IRS partitions based on, for example, the message decoding status, channel quality, and/or the UEs' communication needs as described herein provides several advantages, such as an improved end-to-end transmission delay and fairness in the network.

References:

[1] M. Di Renzo, A. Zappone, M. Debbah, M.-S. Alouini, C. Yuen, J. de Rosny, and S. Tretyakov, "Smart Radio Environments Empowered by Reconfigurable Intelligent Surfaces: How It Works, State of Research, and The Road Ahead," IEEE J. Sel. Areas Commun., vol. 38, no. 11, pp. 2450-2525, 2020.

[2] RWS-210300, "NR repeaters and Reconfigurable Intelligent Surface," 3GPP TSG RAN Rel-18 workshop, June 2021.

[3] RWS-210019, "NR Smart Repeaters for Rel 18," 3GPP TSG RAN Rel18 workshop, June 2021.

[4] V. Arun and H. Balakrishnan, "RFocus: Practical Beamforming for Small Devices," USENIX 2019.

The prior art further includes the following publications: "Dynamic Network Service Selection in IRS-Assisted Wireless Networks: A Game Theory Approach" by Nguyen Cong Luong et al. (arxiv.org, Cornell University Library, 201 Olin Library Cornell University Ithaca, NY 14853, 2020-08-04, XP081731231), "Alternating Beamforming with Intelligent Reflecting Surface Element Allocation" by Cho Hyesang et al. (IEEE Wireless Communication Letters, IEEE, Piscataway, NJ, USA, vol. 10, no. 6, 2021-03-02, pp. 1232-1236), "RIS-Aided Wireless Communications: Prototyping, Adaptive Beamforming, and Indoor/Outdoor Field Trials" by Pei Xilong et al. (IEEE Transactions on Communications, IEEE Service Center, Piscataway, NJ, USA, vol. 69, no. 12, 2021-09-29, pp. 8627-8640), "RFocus: Practical Beamforming for Small Devices" by Arun Venkat et al., (2019-05-13, XP055813966, URL: https://arxiv.org/pdf/1905.05130.pdf), and "Reconfigurable Intelligent Surface-Enabled Spectrum-Sharing Communications Based on Successive Interference Cancellation" by Lai Penghui et al. (IEEE Wireless Communications Letters, IEEE, Piscataway, NJ, USA, vol. 11, no. 1, 2021-10-21, pp. 116-120).

## Claims

1. A method (200) for configuring a set of configurable reflectors (120), wherein the set of configurable reflectors are provided by an intelligent reflecting surface, IRS (106) included in a communication system (100), wherein the communication system further includes an access network node (104), a first communication device, CD (102), a second CD (103), a first link between the first CD and the access network node via the IRS, and a second link between the second CD and the access network node via the IRS, the method comprising:

   determining (s202) a first set of one or more IRS configuration parameters, wherein the first set of IRS configuration parameters comprises at least one of: (a) a first link quality metric for the first link, wherein the first link comprises a first channel between the first CD and the IRS and a second channel between the IRS and the access network node; (b) a first quality-of-service, QoS, requirement for the first CD; or (c) a transmission status for the first CD;
   based on the first set of IRS configuration parameters, partitioning (s204) the set of configurable reflectors, wherein the partitioning comprises defining at least a first subset of the set of configurable reflectors and a second subset of the set of configurable reflectors;
   after defining the first and second subsets, configuring (s206) the first subset of the configurable reflectors and configuring the second subset of the configurable reflectors;
   determining a second set of one or more IRS configuration parameters, wherein the second set of IRS configuration parameters comprises at least one of: (a) a second link quality metric for the second link, wherein the second link comprises a third channel between the second CD and the IRS and a fourth channel between the IRS and the access network node; (b) a second QoS requirement for the second CD; or (c) a transmission status for the second CD, wherein partitioning the set of configurable reflectors comprises partitioning the set of configurable reflectors based on both the first set of IRS configuration parameters and the second set of IRS configuration parameters;
   the access network node receiving, during a first time slot, a first accumulated signal comprising a first message transmitted by the first CD and a second message transmitted by the second CD;
   the access network node decoding from the received accumulated signal the second message transmitted by the second CD, but the access network node not being able to decode from the received accumulated signal the first message transmitted by the first CD;
   in response to being able to decode the second message but not the first message, the access network node triggering an IRS control function, ICF (199), to re-partition the set of configurable reflectors and transmitting a negative acknowledgement, NACK, message to the first CD for causing the first CD to retransmit the first message; and

in response to being able to decode the second message but not the first message, the access network node removing the decoded second message from the received accumulated signal to produce an interference-free signal encoding the first message and buffering the interference-free signal.

2. The method of claim 1, wherein

the first subset of configurable reflectors comprises a first reconfigurable reflector,
the method further comprises determining a phase shift for the first reconfigurable reflector, and
configuring the first subset of configurable reflectors comprises configuring the first configurable reflector to produce the determined phase shift.

3. The method of claim 1, wherein

the first subset of configurable reflectors comprises a first reconfigurable reflector, and
configuring the first subset of configurable reflectors comprises placing the first configurable reflector in an off state to prevent the first configurable reflector from reflecting an impinging signal.

4. The method of any one of claims 1-3, wherein

configuring the first subset of configurable reflectors comprises obtaining a first set of link quality metrics, wherein each link quality metric in the first set of link quality metrics indicates a quality of the first link between the first CD and the access network node, and
configuring the second subset of configurable reflectors comprises obtaining a second set of link quality metrics, wherein each link quality metric in the second set of link quality metrics indicates a quality of the second link between the second CD and the access network node.

5. The method of claim 1, wherein

repartitioning the set of configurable reflectors comprises defining at least a third subset of the set of configurable reflectors and a fourth subset of the set of configurable reflectors, and
the method further comprises, after defining the third and fourth subsets, configuring the third subset of the configurable reflectors and configuring the fourth subset of the configurable reflectors.

6. The method of claim 5, wherein
the third subset of the configurable reflectors comprises each reflector that was included in the first subset of the configurable reflectors and one or more configurable reflectors that were included in the second subset of the configurable reflectors.

7. The method of claim 1, further comprising

after sending the NACK message to the first CD, the access network node receiving, during a second time slot, a second accumulated signal comprising the first message; and
the access network node combining the buffered interference-free signal with the second accumulated signal to produce a combined signal; and
the access network node attempting to decode the first message from the combined signal.

8. A computer program (343) comprising instructions (344) which when executed by processing circuitry (302) of an access network node (104) causes the processing circuitry to perform the method of any one of claims 1-7.

9. A carrier containing the computer program of claim 8, wherein the carrier is one of an electronic signal, an optical signal, a radio signal, and a computer readable storage medium (342).

10. An access network node (104) for configuring a set of configurable reflectors (120), wherein the set of configurable reflectors are provided by an intelligent reflecting surface, IRS (106) included in a communication system (100), wherein the communication system further includes the access network node, a first communication device, CD (102), a second CD (103), a first link between the first CD and the access network node via the IRS and a second link between the second CD and the access network node via the IRS, the access network node being configured to perform the method according to claim 1.

11. The access network node of claim 10, wherein the network node is further configured to perform the method of any one of claims 2-7.

12. An access network node (104), the access network node comprising:

a storage unit (308); and
processing circuitry (302) coupled to the storage unit, wherein the access network node is configured to perform the method of any one of claims 1-7.

## Patentansprüche

1. Verfahren (200) zum Konfigurieren eines Satzes konfigurierbarer Reflektoren (120), wobei der Satz konfigurierbarer Reflektoren durch eine intelligente reflektierende Oberfläche, IRS (106), bereitgestellt wird, die in einem Kommunikationssystem (100) beinhaltet ist, wobei das Kommunikationssystem ferner einen Zugangsnetzwerkknoten (104), eine erste Kommunikationsvorrichtung, CD (102), eine zweite CD (103), eine erste Verbindung zwischen der ersten CD und dem Zugangsnetzwerkknoten über die IRS und eine zweite Verbindung zwischen der zweiten CD und dem Zugangsnetzwerkknoten über die IRS beinhaltet, wobei das Verfahren Folgendes umfasst:

Bestimmen (s202) eines ersten Satzes von einem oder mehreren IRS-Konfigurationsparametern, wobei der erste Satz von IRS-Konfigurationsparametern mindestens eines des Folgenden umfasst: (a) eine erste Verbindungsqualitätsmetrik für die erste Verbindung, wobei die erste Verbindung einen ersten Kanal zwischen der ersten CD und der IRS und einen zweiten Kanal zwischen der IRS und dem Zugangsnetzwerkknoten umfasst; (b) eine erste Dienstgüte-, QoS, Anforderung für die erste CD; oder (c) einen Übertragungsstatus für die erste CD;
basierend auf dem ersten Satz von IRS-Konfigurationsparametern, Partitionieren (s204) des Satzes konfigurierbarer Reflektoren, wobei das Partitionieren Definieren mindestens eines ersten Teilsatzes des Satzes konfigurierbarer Reflektoren und eines zweiten Teilsatzes des Satzes konfigurierbarer Reflektoren umfasst;
nach Definieren des ersten und des zweiten Teilsatzes, Konfigurieren (s206) des ersten Teilsatzes der konfigurierbaren Reflektoren und Konfigurieren des zweiten Teilsatzes der konfigurierbaren Reflektoren;
Bestimmen eines zweiten Satzes eines oder mehrerer IRS-Konfigurationsparameter, wobei der zweite Satz von IRS-Konfigurationsparametern mindestens eines des Folgenden umfasst: (a) eine zweite Verbindungsqualitätsmetrik für die zweite Verbindung,
wobei die zweite Verbindung einen dritten Kanal zwischen der zweiten CD und der IRS und einen vierten Kanal zwischen der IRS und dem Zugangsnetzwerkknoten umfasst; (b) eine zweite QoS-Anforderung für die zweite CD; oder (c) einen Übertragungsstatus für die zweite CD, wobei Partitionieren des Satzes konfigurierbarer Reflektoren Partitionieren des Satzes konfigurierbarer Reflektoren basierend sowohl auf dem ersten Satz von IRS-Konfigurationsparametern als auch dem zweiten Satz von IRS-Konfigurationsparametern umfasst;

Empfangen, durch den Zugangsnetzwerkknoten während eines ersten Zeitschlitzes, eines ersten akkumulierten Signals, das eine erste Nachricht, die von der ersten CD übertragen wird, und eine zweite Nachricht, die von der zweiten CD übertragen wird, umfasst;
Decodieren, durch den Zugangsnetzwerkknoten, aus dem empfangenen akkumulierten Signal der zweiten Nachricht, die von der zweiten CD übertragen wurde, wobei der Zugangsnetzwerkknoten aber nicht im Stande ist, die erste Nachricht, die von der ersten CD übertragen wurde, aus dem empfangenen akkumulierten Signal zu decodieren;
als Reaktion darauf, dass er die zweite Nachricht, nicht aber die erste Nachricht decodieren kann, Auslösen, durch den Zugangsnetzwerkknoten, einer IRS-Steuerfunktion, ICF (199), um den Satz konfigurierbarer Reflektoren neu zu partitionieren und eine negative Bestätigungs-, NACK, Nachricht an die erste CD zu übertragen, um die erste CD zu veranlassen, die erste Nachricht erneut zu übertragen; und
als Reaktion darauf, dass er die zweite Nachricht, nicht aber die erste Nachricht decodieren kann, Entfernen, durch den Zugangsnetzwerkknoten, der decodierten zweiten Nachricht aus dem empfangenen akkumulierten Signal, um ein störungsfreies Signal zu erzeugen, das die erste Nachricht codiert, und Puffern des störungsfreien Signals.

2. Verfahren nach Anspruch 1, wobei

der erste Teilsatz konfigurierbarer Reflektoren einen ersten rekonfigurierbaren Reflektor umfasst,
das Verfahren ferner Bestimmen einer Phasenverschiebung für den ersten rekonfigurierbaren Reflektor umfasst, und
Konfigurieren des ersten Teilsatzes konfigurierbarer Reflektoren Konfigurieren des ersten konfigurierbaren Reflektors umfasst, um die bestimmte Phasenverschiebung zu erzeugen.

3. Verfahren nach Anspruch 1, wobei

der erste Teilsatz konfigurierbarer Reflektoren einen ersten rekonfigurierbaren Reflektor umfasst, und
Konfigurieren des ersten Teilsatzes konfigurierbarer Reflektoren Versetzen des ersten konfigurierbaren Reflektors in einen Aus-Zustand umfasst, um zu verhindern, dass der erste konfigurierbare Reflektor ein einfallendes Signal reflektiert.

4. Verfahren nach einem der Ansprüche 1-3, wobei

Konfigurieren des ersten Teilsatzes konfigurierbarer Reflektoren Erhalten eines ersten Satzes von Verbindungsqualitätsmetriken umfasst, wobei jede Verbindungsqualitätsmetrik im ersten Satz von Verbindungsqualitätsmetriken eine Qualität der ersten Verbindung zwischen der ersten CD und dem Zugangsnetzwerkknoten angibt, und
Konfigurieren des zweiten Teilsatzes konfigurierbarer Reflektoren Erhalten eines zweiten Satzes von Verbindungsqualitätsmetriken umfasst, wobei jede Verbindungsqualitätsmetrik im zweiten Satz von Verbindungsqualitätsmetriken eine Qualität der zweiten Verbindung zwischen der zweiten CD und dem Zugangsnetzwerkknoten angibt.

5. Verfahren nach Anspruch 1, wobei

Neupartitionieren des Satzes konfigurierbarer Reflektoren Definieren mindestens eines dritten Teilsatzes des Satzes konfigurierbarer Reflektoren und eines vierten Teilsatzes des Satzes konfigurierbarer Reflektoren umfasst, und
das Verfahren nach Definieren des dritten und des vierten Teilsatzes ferner Konfigurieren des dritten Teilsatzes der konfigurierbaren Reflektoren und Konfigurieren des vierten Teilsatzes der konfigurierbaren Reflektoren umfasst.

6. Verfahren nach Anspruch 5, wobei
der dritte Teilsatz der konfigurierbaren Reflektoren jeden Reflektor, der in dem ersten Teilsatz der konfigurierbaren Reflektoren beinhaltet war, und einen oder mehrere konfigurierbare Reflektoren, die in dem zweiten Teilsatz der konfigurierbaren Reflektoren beinhaltet waren, umfasst.

7. Verfahren nach Anspruch 1, ferner umfassend

nach Senden der NACK-Nachricht an die erste CD, Empfangen, durch den Zugangsnetzwerkknoten während eines zweiten Zeitschlitzes, eines zweiten akkumulierten Signals, das die erste Nachricht umfasst; und
Kombinieren, durch den Zugangsnetzwerkknoten, des gepufferten störungsfreien Signals mit dem zweiten akkumulierten Signal, um ein kombiniertes Signal zu erzeugen; und
Versuchen, durch den Zugangsnetzwerkknoten, die erste Nachricht aus dem kombinierten Signal zu decodieren.

8. Computerprogramm (343), umfassend Anweisungen (344), die, wenn sie von Verarbeitungsschaltkreisen (302) eines Zugangsnetzwerkknotens ausgeführt werden, die Verarbeitungsschaltkreise veranlassen, das Verfahren nach einem der Ansprüche 1-7 durchzuführen.

9. Träger, der das Computerprogramm nach Anspruch 8 enthält, wobei der Träger eines von einem elektronischen Signal, einem optischen Signal, einem Funksignal und einem computerlesbaren Speichermedium (342) ist.

10. Zugangsnetzwerkknoten (104) zum Konfigurieren eines Satzes konfigurierbarer Reflektoren (120), wobei der Satz konfigurierbarer Reflektoren durch eine intelligente reflektierende Oberfläche, IRS (106), bereitgestellt wird, die in einem Kommunikationssystem (100) beinhaltet ist, wobei das Kommunikationssystem ferner den Zugangsnetzwerkknoten, eine erste Kommunikationsvorrichtung, CD (102), eine zweite CD (103), eine erste Verbindung zwischen der ersten CD und dem Zugangsnetzwerkknoten über die IRS und eine zweite Verbindung zwischen der zweiten CD und dem Zugangsnetzwerkknoten über die IRS beinhaltet, wobei der Zugangsnetzwerkknoten dazu konfiguriert ist, das Verfahren nach Anspruch 1 durchzuführen.

11. Zugangsnetzwerkknoten nach Anspruch 10, wobei der Netzwerkknoten ferner dazu konfiguriert ist, das Verfahren nach einem der Ansprüche 2-7 durchzuführen.

12. Zugangsnetzwerkknoten (104), wobei der Zugangsnetzwerkknoten Folgendes umfasst:

   eine Speichereinheit (308); und
   Verarbeitungsschaltkreise (302), die mit der Speichereinheit gekoppelt sind, wobei der Zugangsnetzwerkknoten dazu konfiguriert ist, das Verfahren nach einem der Ansprüche 1-7 durchzuführen.

**Revendications**

1. Procédé (200) de configuration d'un ensemble de réflecteurs configurables (120), dans lequel l'ensemble de réflecteurs configurables sont prévus par une surface réfléchissante intelligente, IRS (106) incluse dans un système de communication (100), dans lequel le système de communication inclut en outre un nœud de réseau d'accès (104), un premier dispositif de communication, CD (102), un second CD (103), une première liaison entre le premier CD et le nœud de réseau d'accès via l'IRS, et une seconde liaison entre le second CD et le nœud de réseau d'accès via l'IRS, le procédé comprenant :

   la détermination (s202) d'un premier ensemble d'un ou plusieurs paramètres de configuration IRS, dans lequel le premier ensemble de paramètres de configuration IRS comprend au moins l'un parmi : (a) une première mesure de qualité de liaison pour la première liaison, dans lequel la première liaison comprend un premier canal entre le premier CD et l'IRS et un deuxième canal entre l'IRS et le nœud de réseau d'accès ; (b) une première exigence de qualité de service, QoS, pour le premier CD ; ou (c) un état de transmission pour le premier CD ;
   sur la base du premier ensemble de paramètres de configuration IRS, le partitionnement (s204) de l'ensemble des réflecteurs configurables, dans lequel le partitionnement comprend la définition d'au moins un premier sous-ensemble de l'ensemble de réflecteurs configurables et un deuxième sous-ensemble de l'ensemble de réflecteurs configurables ;
   après avoir défini les premier et deuxième sous-ensembles, la configuration (s206) du premier sous-ensemble des réflecteurs configurables et la configuration du deuxième sous-ensemble des réflecteurs configurables ;
   la détermination d'un second ensemble d'un ou plusieurs paramètres de configuration IRS, dans lequel le second ensemble de paramètres de configuration IRS comprend au moins l'un parmi : (a) une seconde mesure de qualité de liaison pour la seconde liaison,
   dans lequel la seconde liaison comprend un troisième canal entre le second CD et l'IRS et un quatrième canal entre l'IRS et le nœud de réseau d'accès ; (b) une seconde exigence QoS pour le second CD ; ou (c) un état de transmission pour le second CD, dans lequel le partitionnement de l'ensemble de réflecteurs configurables comprend le partitionnement de l'ensemble de réflecteurs configurables sur la base à la fois du premier ensemble de paramètres de configuration IRS et du second ensemble de paramètres de configuration IRS ;
   le nœud de réseau d'accès recevant, au cours d'un premier intervalle de temps, un premier signal accumulé comprenant un premier message transmis par le premier CD et un second message transmis par le second CD ;
   le nœud de réseau d'accès décodant à partir du signal accumulé reçu le second message transmis par le second CD, mais le nœud de réseau d'accès n'étant pas en mesure de décoder à partir du signal accumulé reçu le premier message transmis par le premier CD ;
   en réponse à la possibilité de décoder le second message mais pas le premier message, le nœud de réseau d'accès déclenchant une fonction de commande IRS, ICF (199), pour repartitionner l'ensemble de réflecteurs configurables et transmettant un message d'accusé de réception négatif, NACK, au premier CD pour amener le premier CD à retransmettre le premier message ; et
   en réponse à la possibilité de décoder le second message mais pas le premier message, le nœud de réseau d'accès supprimant le second message décodé du signal accumulé reçu pour produire un signal sans interférence codant le premier message et mettant en mémoire tampon le signal sans interférence.

2. Procédé selon la revendication 1, dans lequel

   le premier sous-ensemble de réflecteurs configurables comprend un premier réflecteur reconfigurable,
   le procédé comprend en outre la détermination d'un déphasage pour le premier réflecteur reconfigurable, et
   la configuration du premier sous-ensemble de réflecteurs configurables comprend la configuration du premier réflecteur configurable pour produire le déphasage déterminé.

**3.** Procédé selon la revendication 1, dans lequel

le premier sous-ensemble de réflecteurs configurables comprend un premier réflecteur reconfigurable, et
la configuration du premier sous-ensemble de réflecteurs configurables comprend la mise du premier réflecteur configurable dans un état désactivé afin d'empêcher le premier réflecteur configurable de réfléchir un signal incident.

**4.** Procédé selon l'une quelconque des revendications 1-3, dans lequel

la configuration du premier sous-ensemble de réflecteurs configurables comprend l'obtention d'un premier ensemble de mesures de qualité de liaison, dans lequel chaque mesure de qualité de liaison dans le premier ensemble de mesures de qualité de liaison indique la qualité de la première liaison entre le premier CD et le nœud de réseau d'accès, et
la configuration du deuxième sous-ensemble de réflecteurs configurables comprend l'obtention d'un second ensemble de mesures de qualité de liaison, dans lequel chaque mesure de qualité de liaison dans le second ensemble de mesures de qualité de liaison indique la qualité de la seconde liaison entre le second CD et le nœud de réseau d'accès.

**5.** Procédé selon la revendication 1, dans lequel

le repartitionnement de l'ensemble de réflecteurs configurables comprend la définition d'au moins un troisième sous-ensemble de l'ensemble de réflecteurs configurables et d'un quatrième sous-ensemble de l'ensemble de réflecteurs configurables, et
le procédé comprend en outre, après avoir défini les troisième et quatrième sous-ensembles, la configuration du troisième sous-ensemble des réflecteurs configurables et la configuration du quatrième sous-ensemble des réflecteurs configurables.

**6.** Procédé selon la revendication 5, dans lequel
le troisième sous-ensemble des réflecteurs configurables comprend chaque réflecteur qui était inclus dans le premier sous-ensemble des réflecteurs configurables et un ou plusieurs réflecteurs configurables qui étaient inclus dans le deuxième sous-ensemble des réflecteurs configurables.

**7.** Procédé selon la revendication 1, comprenant en outre

après avoir envoyé le message NACK au premier CD, le nœud de réseau d'accès recevant, au cours d'un second intervalle de temps, un second signal cumulé comprenant le premier message ; et
le nœud de réseau d'accès combinant le signal sans interférence mis en mémoire tampon avec le second signal accumulé pour produire un signal combiné ; et
le nœud de réseau d'accès tentant de décoder le premier message à partir du signal combiné.

**8.** Programme informatique (343) comprenant des instructions (344) qui, lorsqu'elles sont exécutées par un ensemble de circuits de traitement (302), d'un nœud de réseau d'accès (104), amènent l'ensemble de circuits de traitement à effectuer le procédé selon l'une quelconque des revendications 1-7.

**9.** Porteuse contenant le programme informatique selon la revendication 8, dans laquelle la porteuse est l'un parmi un signal électronique, un signal optique, un signal radio et un support de stockage lisible par ordinateur (342).

**10.** Nœud de réseau d'accès (104) pour configurer un ensemble de réflecteurs configurables (120), dans lequel l'ensemble de réflecteurs configurables sont prévus par une surface réfléchissante intelligente, IRS (106) incluse dans un système de communication (100), dans lequel le système de communication inclut en outre le nœud de réseau d'accès, un premier dispositif de communication, CD (102), un second CD (103), une première liaison entre le premier CD et le nœud de réseau d'accès via l'IRS, et une seconde liaison entre le second CD et le nœud de réseau d'accès via l'IRS, le nœud de réseau d'accès étant configuré pour effectuer le procédé selon la revendication 1.

**11.** Nœud de réseau d'accès selon la revendication 10, dans lequel le nœud de réseau est en outre configuré pour effectuer le procédé selon l'une quelconque des revendications 2-7.

**12.** Nœud de réseau d'accès (104), le nœud de réseau d'accès comprenant :

une unité de stockage (308) ; et
un ensemble de circuits de traitement (302) couplé à l'unité de stockage, dans lequel le nœud de réseau d'accès est configuré pour effectuer le procédé selon l'une quelconque des revendications 1-7.

FIG. 1

200

s202

determining a first set of one or more IRS configuration parameters

s204

based on the first set of IRS configuration parameters, partitioning the set of configurable reflectors, wherein the partitioning comprises defining at least a first subset of the set of configurable reflectors and a second subset of the set of configurable reflectors

s206

configuring the first subset of the configurable reflectors and configuring the second subset of the configurable reflectors

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. DI RENZO** ; **A. ZAPPONE** ; **M. DEBBAH** ; **M.-S. ALOUINI** ; **C. YUEN** ; **J. DE ROSNY** ; **S. TRETYAKOV**. Smart Radio Environments Empowered by Reconfigurable Intelligent Surfaces: How It Works, State of Research, and The Road Ahead. *IEEE J. Sel. Areas Commun.*, 2020, vol. 38 (11), 2450-2525
- NR repeaters and Reconfigurable Intelligent Surface. *RWS-210300*, June 2021
- NR Smart Repeaters for Rel 18. *RWS-210019*, June 2021
- **V. ARUN** ; **H. BALAKRISHNAN**. RFocus: Practical Beamforming for Small Devices. *USENIX*, 2019
- Dynamic Network Service Selection in IRS-Assisted Wireless Networks: A Game Theory Approach. **NGUYEN CONG LUONG et al.** arxiv.org. Cornell University Library, 04 August 2020

- Alternating Beamforming with Intelligent Reflecting Surface Element Allocation. **CHO HYESANG et al.** IEEE Wireless Communication Letters. IEEE, 02 March 2021, vol. 10, 1232-1236
- **PEI XILONG et al.** RIS-Aided Wireless Communications: Prototyping, Adaptive Beamforming, and Indoor/Outdoor Field Trials. *IEEE Transactions on Communications, IEEE Service Center, Piscataway, NJ, USA*, 29 September 2021, vol. 69 (12), 8627-8640
- **ARUN VENKAT et al.** *RFocus: Practical Beamforming for Small Devices*, 13 May 2019, https://arxiv.org/pdf/1905.05130.pdf
- **LAI PENGHUI et al.** Reconfigurable Intelligent Surface-Enabled Spectrum-Sharing Communications Based on Successive Interference Cancellation. *IEEE Wireless Communications Letters, IEEE, Piscataway, NJ, USA*, 21 October 2021, vol. 11 (1), 116-120